(19) Europäisches Patentamt
European Patent Office
Office européen des brevets

(11) Veröffentlichungsnummer: **0 214 442 B1**

(12) **EUROPÄISCHE PATENTSCHRIFT**

(45) Veröffentlichungstag der Patentschrift: **07.11.90**

(51) Int. Cl.⁵: **C08G 18/32**, C08G 59/18, C08G 59/40, C09D 5/44

(21) Anmeldenummer: **86110498.2**

(22) Anmeldetag: **30.07.86**

(54) **Verfahren zur Herstellung von Harnstoffgruppierungen aufweisenden resolhärtbaren Lackbindemitteln.**

(30) Priorität: **09.08.85 AT 2331/85**

(43) Veröffentlichungstag der Anmeldung: **18.03.87 Patentblatt 87/12**

(45) Bekanntmachung des Hinweises auf die Patenterteilung: **07.11.90 Patentblatt 90/45**

(84) Benannte Vertragsstaaten: **BE CH DE FR GB IT LI NL SE**

(56) Entgegenhaltungen:
**DE-A- 3 311 516**
**FR-A- 2 384 011**
**US-A- 3 963 663**

(73) Patentinhaber: **Vianova Kunstharz Aktiengesellschaft, A-8402 Werndorf(AT)**

(72) Erfinder: **Paar, Willibald, Dr., Richard-Wagnergasse 46, A-8010 Graz(AT)**
Erfinder: **Gmoser, Johann, Radegunderstrasse 30, A-8045 Graz(AT)**

**EP 0 214 442 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Verfahren zur Herstellung von Harnstoffgruppen aufweisenden resolhärtbaren Lackbindemitteln, welche insbesonders für die Formulierung hochwertiger KETL-Grundierungen geeignet sind.

Aus der AT-PS 378 537 ist ein Verfahren zur Herstellung von kathodisch abscheidbaren Elektrotauchlack-Bindemitteln auf der Basis von modifizierten Epoxidharzen bekannt, gemäß welchem ein Epoxidharz mit einem primären Amin umgesetzt und das resultierende, sekundäre Aminogruppen aufweisende Addukt mit einem Phenol und Formaldehyd reagiert wird. Die Bindemittel sind, soferne ein ausreichender Überschuß an Formaldehyd zum Einsatz gelangt, aufgrund der Resolkonstitution selbstvernetzend.

In einer besonderen Ausführungsform, wie sie in AT-PS 384.434 beschrieben wird, kann das Phenol ganz oder teilweise durch Aminoalkylierungsprodukte von Phenolen ersetzt werden, wodurch eine bessere Löslichkeit im Sinne einer Verringerung der für eine ausreichende Wasserverdünnbarkeit notwendigen Säuremenge erreicht wird und zusätzliche flexibilisierende und verlauffördernde Gruppen in das Bindemittelmolekül eingebaut werden können.

Obwohl die Produkte des Standes der Technik bei Verwendung als Lackbindemittel, insbesonders bei Formulierung als kathodisch abscheidbare Elektrotauchlacke (K-ET-Lacke) ausgezeichnete Ergebnisse liefern, zeigen sie bei einzelnen Anwendungen, bei welchen besondere Anforderungen an die Haftfestigkeit, insbesonders von Folgeschichten, gestellt werden, noch Mängel.

Es ist bekannt, daß durch den Einbau von Amid-, Urethan- oder Harnstoffgruppierungen diese Eigenschaft verbessert werden kann, wobei jedoch in vielen Fällen Einbußen bei anderen Eigenschaften, z.B. der Korrosionsfestigkeit oder Wasser- bzw. Lösemittelfestigkeit in Kauf genommen werden müssen.

Es wurde nun gefunden, daß Produkte, wie sie nach dem Prinzip der AT-PS 378 537 erhalten werden können, bezüglich ihrer Haftfestigkeitseigenschaften wesentlich verbessert werden, ohne daß dabei andere Eigenschaften negativ beeinflußt werden, wenn die eingesetzten Phenole substituierte Harnstoffgruppen aufweisende Phenolkondensate sind.

Die Erfindung betrifft demgemäß ein Verfahren zur Herstellung von Harnstoffgruppierungen aufweisenden resolhärtbaren Lackbindemitteln auf der Basis von resolmodifizierten Epoxidharzaminaddukten, wobei man aus einem monosubstituierten ein- oder zweiwertigen Phenol, aus einem primären Monoamin und/oder Diamin und aus Formaldehyd ein Aminoalkylierungsprodukt herstellt, dessen Aminowasserstoffe in einem weiteren Reaktionsschritt in Gegenwart eines aprotischen Lösemittels bei 30 bis 50°C mit Mono- und/oder Diisocyanatverbindungen bis zu einem NCO-Wert von 0 unter Bildung von Harnstoffgruppierungen zu einem höchstens vier, vorzugsweise zwei, Phenolkörper aufweisenden Zwischenprodukt umgesetzt werden, welches anschließend mit einem, gegebenenfalls modifizierten, Epoxidharz-Aminaddukt, welches keine freien Epoxidgruppen enthält, und mit Formaldehyd bei 50 bis 90°C bis zur vollständigen Bindung des Formaldehyds reagiert wird, wobei pro Mol NH-Gruppen des Epoxidharz-Aminadduktes 0,5 bis 1,0 Mol phenolischen Zwischenproduktes, und pro Mol formaldehydreaktiver Stellen der Phenolkörper 0,4 bis 0,9 Mol Formaldehyd eingesetzt werden.

Durch die Umsetzung der Aminowasserstoffe mit den Isocyanaten werden die für die Eigenschaften des Endproduktes wesentlichen Harnstoffgruppierungen gebildet.

Die im erfindungsgemäßen Verfahren eingesetzten Harnstoffgruppierungen aufweisenden Aminoalkylierungsprodukte werden durch Umsetzung von ein- oder mehrwertigen Phenolen mit primären Aminen und Formaldehyd sowie anschließender Umsetzung der Aminowasserstoffe mit Isocyanatverbindungen erhalten. Im beiliegenden Formelbild wird die Reaktionsfolge anhand eines einfachen Beispiels dargestellt, wobei Formel I die Reaktionsfolge bei Verwendung von primären Monoaminen zeigt. Bei der Formel II wird ein primäres Diamin eingesetzt. Die Bedeutung der Reste X, Y bzw. R ergibt sich zwanglos aus der nachfolgenden Aufzählung der Ausgangsstoffe.

Zur Vermeidung von Gelierungen müssen in den beiden Fällen die entsprechend funktionellen Isocyanatverbindungen eingesetzt werden. Durchschnittlich soll das Aminoalkylierungsprodukt nicht mehr als 4 Phenolkörper aufweisen. Vorzugsweise werden Produkte mit 2 Phenolkörpern eingesetzt. Die Möglichkeit einer gewissen Überschneidung der beiden Formen ist natürlich gegeben und liegt im Erfahrungsbereich des Fachmannes.

Als Phenole können für das erfindungsgemäße Verfahren alle Phenole mit mehr als einer formaldehydreaktiven Stelle eingesetzt werden. Zur Erzielung einer ausreichenden Vernetzungsdichte bei selbstvernetzenden Produkten sollen auch die Aminoalkylierungsprodukte mindestens 2 formaldehydreaktive Stellen aufweisen. Neben dem einfachen Phenol werden Alkylphenole, wie die Butylphenole und ihre Homologen, Diphenole und Diphenylolalkane, wie Bis-(4-hydroxyphenyl)-methan oder 2,2-Bis-(4-hydroxy-phenyl-)-propan eingesetzt.

Als primäre Amine können sowohl Alkylamine, vorzugsweise die höheren Homologen mit 4 oder mehr C-Atomen, als auch Alkanolamine, wie das Monoethanolamin und dessen Homologe eingesetzt werden. Zur gleichzeitigen Einführung basischer Gruppen in Form von tertiären Aminogruppen werden vorteilhaft Dialkylaminoalkylamine, wie das Dimethylaminopropylamin etc. verwendet.

Als primäre Diamine werden vorzugsweise Alkylendiamine wie Ethylendiamin und seine Homologen verwendet.

Der Formaldehyd kann in seinen handelsüblichen Formen als Lösung eingesetzt werden, vorzugsweise wird Paraformaldehyd mit $CH_2O$-Gehalten von mehr als 90 % eingesetzt.

Gemäß den Formeln werden beim Einsatz von primären Monoaminen vorzugsweise Diisocyanate, wie Toluylendiisocyanat, Isophorondiisocyanat, Hexamethylendiisocyanat, Trimethylhexamethylendiisocyanat u. ä. oder Umsetzungsprodukte von Diolen mit Diisocyanaten im Molverhältnis 1 : 2 verwendet.

Erfolgt die Aminoalkylierung mit primären Diaminen, werden vorzugsweise Monoisocyanate wie Phenylisocyanat oder halbblockierte Diisocyanate eingesetzt.

Die Herstellung der erfindungsgemäß eingesetzten Zwischenprodukte erfolgt in einer ersten Stufe durch gemeinsame Reaktion des Phenols, des Amins und des Formaldehyds bei 80 bis 130°C, wobei das Reaktionswasser mit Hilfe eines Schleppmittels azeotrop entfernt wird. Die weitere Umsetzung mit der Isocyanatverbindung erfolgt, vorzugsweise in Gegenwart eines aprotischen Lösemittels bei 30 bis 50°C, wobei die Isocyanatverbindung portionsweise unter Kühlung zugegeben wird, bis zu einem NCO-Wert von 0.

Die weitere Umsetzung dieser Zwischenprodukte mit den modifizierten Epoxidharzen erfolgt in der in der AT-PS 378 537 beschriebenen Weise.

Dabei werden die gegebenenfalls modifizierten Epoxidharz-Aminaddukte bei 50 bis 90°C mit dem erfindungsgemäß eingesetzten Zwischenprodukt und Formaldehyd bis zur vollständigen Bindung des Formaldehyds reagiert, wobei pro Mol NH-Gruppen des Epoxidharz-Aminadduktes 0,5 bis 1 Mol des Zwischenproduktes, und pro Mol formaldehydreaktiver Stellen der Phenolkörper 0,4 bis 0,9 Mol Formaldehyd eingesetzt werden. Bei der Herstellung der Epoxidharz-Aminaddukte werden die Epoxidharze in Gegenwart eines aprotischen Lösungsmittels mit einem primären Amin zu einem sekundäre Aminogruppen aufweisenden Epoxidharz-Amin-Addukt umgesetzt. Pro verfügbarer Epoxidgruppe des Epoxidharzes kommen dabei 0,6 bis 1,0 Mol primäre Aminogruppen zum Einsatz, wobei als Amine primäre Monoalkylamine, vorzugsweise solche, deren Alkylrest 4 und mehr Kohlenstoffatome aufweist oder primäre Alkylendiamine oder Diamine, welche neben der primären Aminogruppe noch eine tertiäre Aminogruppe, z. B. eine Dialkylaminogruppe aufweisen, verwendet werden. Als bevorzugte Vertreter seien das n- bzw. Isobutylamin, Hexylamine, das 2-Ethylhexylamin, Ethylendiamin und seine Homologe sowie prim.-tert. Diamine, wie Dimethylaminopropylamin, Diethylaminopropylamin und Homologe dieser Reihe genannt. Besonders bevorzugt werden Mischungen aus Alkylaminen bzw. Alkylendiaminen und Dialkylaminoalkylaminen eingesetzt. Die Umsetzung erfolgt bei 50 bis 90 Grad C.

Als Lösungsmittel, deren Anwesenheit für die Reaktionsführung in einzelnen Fällen wesentlich ist, werden aromatische Kohlenwasserstoffe, wie Toluol oder Xylol oder Glykoldiether, wie Diethylenglykoldimethylether eingesetzt. Die Menge des Lösungsmittels beträgt zwischen 10 und 50 % bezogen auf das Epoxidharz-Amin-Addukt.

Das Epoxidharz-Amin-Addukt kann gegebenenfalls bis zu 40 Mol-%, bezogen auf die verfügbaren Epoxidgruppen, mit Carboxylverbindungen, wie gesättigten oder ungesättigten Fettsäuren, Carboxylgruppen aufweisenden Polyestern oder entsprechenden anderen Präpolymeren, z. B. auf Acrylatbasis, modifiziert sein.

Als weitere Modifikatoren können auch sekundäre Amine, insbesonders sekundäre Alkylamine eingesetzt werden. Durch die dabei resultierenden tertiären Aminogruppen kann die Löslichkeit der Produkte beeinflußt werden.

Die Reaktionsstufe wird bis zu einem Epoxidwert von praktisch 0 geführt, d. h., daß die erhaltenen Epoxid-Amin-Addukte frei von Epoxidgruppen sind.

Die für das erfindungsgemäße Verfahren einsetzbaren Epoxidharze sind handelsübliche Di- oder Polyepoxidverbindungen, wie sie durch Umsetzung von mehrwertigen Phenolen, insbesonders dem Bisphenol A oder Phenolnovolaken und Epichlorhydrin erhalten werden. Gegebenenfalls können auch andere Epoxidharze, z. B. auf Basis von Polyolen eingesetzt werden. Produkte dieser Art sind dem Fachmann bekannt und werden in der Literatur in großer Zahl beschrieben. Bevorzugt werden für das erfindungsgemäße Verfahren Epoxidharze auf der Basis von Bisphenol A oder Phenolnovolaken mit einem Epoxidäquivalentgewicht von 180 bis 1000 eingesetzt.

Zur Erzielung der Wasserverdünnbarkeit werden die basischen Gruppen des Reaktionsproduktes mit Säuren, vorzugsweise mit Ameisensäure, Essigsäure oder Milchsäure partiell oder vollständig neutralisiert. Für eine praxisgerechte Verdünnbarkeit genügt dafür üblicherweise eine Neutralisation von 10 - 40 % der basischen Gruppen oder eine Menge von ca.20 bis 60 Millimol Säure pro 100 g Festharz. Die Bindemittel werden dann mit deionisiertem Wasser auf die gewünschte Konzentration verdünnt; gegebenenfalls werden sie vor der Neutralisation oder vor der Verdünnung oder im teilverdünnten Zustand mit Pigmenten, Füllstoffen und anderen Zusatzstoffen zu pigmentierten Lacken verarbeitet.

Die Formulierung solcher Lacke sowie deren Verarbeitung im Elektrotauchlackierverfahren sind dem Fachmann bekannt und in der Literatur beschrieben. Die Härtung der abgeschiedenen Überzüge erfolgt beim Einsatz als Grundierung bei Temperaturen zwischen 150 und 170 Grad C während 10 bis 30 Minuten. Soferne die Bindemittel nicht in ausreichendem Maße selbstvernetzende Strukturen aufweisen, können auch zusätzliche Vernetzungsmittel, wie blockierte Isocyanate oder Aminoharze bzw. Phenolharze, mitverwendet werden. Die Produkte können bei entsprechender Formulierung auch durch andere Verfahren, wie Tauchen, Walzen oder Spritzen aufgebracht werden. Gegebenenfalls können die Bindemittel auch in organischen Lösungsmitteln verarbeitet werden.

Die nachfolgenden Beispiele erläutern die Erfindung, ohne sie in ihrem Umfang zu beschränken. Alle Angaben in Teilen oder Prozenten beziehen sich, soferne nichts anderes angegeben ist, auf Gewichtseinheiten

Die folgenden Abkürzungen werden in den Beispielen benützt:

| | |
|---|---|
| BPA | Bisphenol A |
| BPF | Bisphenol F |
| DEAPA | Diethylaminopropylamin |
| DEGM | Diethylenglykoldimethylether |
| DGDE | Diethylenglykoldiethylether |
| DODAM | Dodecandiamin |
| EGL | Ethylenglykolmonoethylether |
| EHA | 2-Ethylhexylamin |
| EHX | 2-Ethylhexanol |
| EPH I | Diepoxidharz auf Basis von Bisphenol A (Epoxidäquivalentgewicht ca. 190) |
| EPH II | Diepoxidharz auf Basis von Bisphenol A (Epoxidäquivalentgewicht ca. 475) |
| HEMA | Hydroxyethylmethacrylat |
| HMDA | Hexamethylendiamin |
| HMDI | Hexamethylendiisocyanat |
| THMDI | Trimethylhexamethylendiisocyanat |
| IBA | Isobutylamin |
| IPDI | Isophorondiisocyanat |
| M I | mit EHX halbblockiertes TDI |
| M II | Umsetzungsprodukt auf 1 Mol IPDI und 1 Mol EGL |
| M III | Umsetzungsprodukt aus 1 Mol TDI und 1 Mol HEMA |
| MIBK | Methylisobutylketon |
| MIPA | Monoisopropanolamin |
| MOLA | Monoethanolamin |
| MSA | Maleinsäureanhydrid |
| NPH | Nonylphenol (handelsüblich) |
| PF 91 | Paraformaldehyd (91 % $CH_2O$) |
| PH | Phenol |
| PPD | Umsetzungsprodukt aus 1 Mol Polypropylenglykol (Molgew. ca. 600) und 2 Mol TDI |
| PME | Propylenglykolmonomethylether |
| TBP | p-tert.-Butylphenol |
| TDI | Toluylendiisocyanat |
| X | Xylol |
| B 180 | flüssiges Polybutadienöl (ca. 75 % 1,4 cis-, ca. 25 % 1,4-trans- und ca. 1 % Vinyl-Doppelbindungen; Molekulargewicht ca. 1500 ± 15 % Jodzahl ca. 450 g / 1000 g. |

Herstellung der erfindungsgemäß eingesetzten Harnstoffgruppen tragenden Zwischenprodukte

In einem mit Wasserabscheider, Kühler, Thermometer und Rühreinrichtung ausgestatteten Reaktionsgefäß wird das Amin und das Phenol auf 70°C erwärmt und der Paraformaldehyd portionsweise zugesetzt, wobei die Temperatur durch die auftretende Exothermie nicht über 80°C ansteigen soll. Die Abtrennung des gebildeten Reaktionswassers erfolgt mit Hilfe eines Schleppmittel mit einem Siedebereich von 80 - 130°C (z. B. einem entsprechenden Spezialbenzin). Die Reaktion wird solange geführt, bis die entsprechende Menge Reaktionswasser abgeschieden wurde. Nach Abziehen des Schleppmittels im Vakuum wird das Produkt mit einem aprotischen Lösemittel verdünnt und bei 30 - 50°C unter portionsweiser Zugabe mit der Isocyanatverbindung bis zu einem NCO-Wert von 0 umgesetzt. Die Mengenverhältnisse und Reaktionsbedingungen sind in der Tabelle 1 zusammengefaßt.

TAB. 1 Harnstoffgruppentragende Zwischenprodukte HPK 1 bis 7

| HPK | AMIN g | (Mol) | PHENOL g | (Mol) | FORMAL-DEHYD g | (Mol) | LÖSEMITTEL (2) | ISOCYANAT-VERB. g | (Mol) | Reaktionstemperatur °C | Molgew. berechnet |
|---|---|---|---|---|---|---|---|---|---|---|---|
| 1 | 122 MOLA | (2,0) | 440 NPH | (2,0) | 66 | (2,0) | X / 75% | 210 THMDI | (1,0) | 35-40 | 796 |
| 2 | 258 EHA | (2,0) | 452 BPA | (2,0) | 66 | (2,0) | DGDE / 70% | 168 HMDI | (1,0) | 30-35 | 902 |
| 3 | 116 HMDA | (1,0) | 188 PH | (2,0) | 66 | (2,0) | MIBK / 75% | 608 MI | (2,0) | 45-50 | 936 |
| 4 | 73 IBA | (1,0) | 200 BPF | (1,0) | 33 | (1,0) | DGDE / 75% | 312 MII | (1,0) | 45-50 | 597 |
| 5 | 200 DODAM | (1,0) | 300 TBP | (2,0) | 66 | (2,0) | MIBK / 70% | 608 MIII | (2,0) | 40-45 | 1132 |
| | 130 DFAPA | (1,0) | 220 NPH | (1,0) | | | | | | | |
| 6 | | | | | 66 | (2,0) | X / 70% | 210 THMDI | (1,0) | 30-35 | 807 |
| | 73 MIPA | (1,0) | 150 TBP | (1,0) | | | | | | | |
| 7 | 146 IBA | (2,0) | 452 BPA | (2,0) | 66 | (2,0) | DGDE / 75% | 948 PPD | (1,0) | 45-50 | 1570 |

(1) eingesetzt als PF 91%

(2) Die Menge des Lösemittels ergibt sich aus dem (in %) angegebenen Festkörpergehalt des Endproduktes

Herstellung der in den Beispielen eingesetzten Epoxidharz-Aminaddukte

Herstellung der Epoxidharz-Amin-Addukte A 1 bis A 5

Addukt A 1: In einem mit Thermometer, Rührer und Rückflußkühler ausgestatteten Reaktionsgefäß werden 190 Tle EPH I (1 Val) in 132 Tlen Toluol gelöst und auf 60 Grad C erwärmt. Anschließend wird eine Mischung von 59 Tlen DEAPA (0,45 Mol) und 58 Tlen EHA (0,45 Mol) langsam zugegeben, wobei die Reaktionstemperatur, gegebenenfalls unter Kühlung des Ansatzes, auf 75 bis 80 Grad C gehalten wird. Die Temperatur wird so lange gehalten, bis der Epoxidwert auf einen Wert von praktisch 0 gesunken ist. Die Adduktlösung kann unmittelbar weiterverarbeitet werden. Das Addukt enthält, bezogen auf Festharz, 0,8 Mol NH-Gruppen.

Addukt A 2: In gleicher Weise wie bei A 1 wird eine Lösung von 475 Tlen EPH II (1 Val) in 254 Tlen Toluol mit 59 Tlen DEAPA und 58 Tlen EHA (jeweils 0,45 Mol) umgesetzt. Das Produkt enthält 0,8 Mol NH-Gruppen (bezogen auf Festharz).

Addukt A 3: In gleicher Weise wie bei A 1 wird eine Lösung von 760 Tlen EPH I (4 Val) in 362 Tlen Toluol mit 260 Tlen DEAPA (2 Mol) und 114 Tlen HMDA (1 Mol) ungesetzt. Das Produkt enthält 4,0 Mol NH-Gruppen in 1134 g Festharz.

Addukt A 4: 700 Tle B 180 werden in bekannter Weise in Gegenwart von 0,05 Tlen Diphenylparaphenylendiamin (Inhibitor) bei 200°C mit 100 Tlen MSA so lange reagiert, bis das MSA vollständig gebunden ist. Nach Kühlen auf 100°C werden 130 Tle EHX zugesetzt und bei 120°C bis zum Erreichen der theoretischen Säurezahl des Halbesters verestert (MAD A). 110 Tle MAD A (entsprechend ca. 0,12 COOH-Gruppen) werden mit 212 Tlen EPH I in 80%iger Lösung in DEGM bei 120°C bis zu einer Säurezahl von praktisch Null umgesetzt. Nach Zusatz von 108 Tlen DEGM, 59 Tlen DEAPA (0,45 Mol) und 58 Tlen EHA (0,45 Mol) wird der Ansatz bei 65 - 70°C bis zu einem Epoxidwert von praktisch Null reagiert.

Beispiele 1 bis 7:

Gemäß den in der Tabelle 2 angegebenen Mengenverhältnissen werden die Epoxidharz-Aminaddukte mit den Zwischenprodukten gemäß Tabelle 1 sowie gegebenenfalls einer weiteren Phenolverbindung und Formaldehyd bei 60 bis 80°C bis zu einem Gehalt an freiem Formaldehyd von weniger als 0,3 % (bezogen auf den eingesetzten Formaldehyd) reagiert.

Das Harz wird dann mit der angegebenen Säuremenge versetzt und in Wasser dispergiert. Der Festkörper der resultierenden Dispersion ist in der Tabelle 2 angegeben.

Tabelle 2: Erfindungsgemäße Beispiele 1 - 7

| B | Epoxidharz-Aminaddukt Tle Lösg./% | (Tle Festh.) | Mol NH | HPK Tle Lösg.- (Festh.) | (Mol) | Phenolkomponente Teile | (Mol) | Formaldehyd (1) Teile | (Mol) | MEQ (2) | Festkörpergehalt der Dispersion % | Einbrenn-temp. (3) °C |
|---|---|---|---|---|---|---|---|---|---|---|---|---|
| 1 | 439/70 A1 | (307) | 0,8 | 318 HPK 1 (239) | (0,3) | 91 BPA | (0,4) | 45 | (1,5) | 50 | 40 | 160 |
| 2 | 439/70 A1 | (307) | 0,8 | 773 HPK 2 (541) | (0,6) | – | – | 45 | (1,5) | 50 | 40 | 150 |
| 3 | 846/70 A2 | (592) | 0,8 | 250 HPK 3 (187) | (0,2) | 68 BPA<br>44 NPH | (0,3)<br>(0,2) | 39 | (1,3) | 45 | 40 | 160 |
| 4 | 1496/75,8 A3 | (1134) | 4,0 | 1592 HPK 4 (1194) | (2,0) | 180 TBP | (1,2) | 162 | (5,4) | 40 | 35 | 165 |
| 5 | 629/70 A4 | (440) | 0,8 | 485 HPK 5 (340) | (0,3) | 91 BPA | (0,4) | 39 | (1,3) | 35 | 40 | 150 |
| 6 | 629/70 A4 | (440) | 0,8 | 461 HPK 6 (323) | (0,4) | 91 BPA | (0,4) | 60 | (2,0) | 30 | 45 | 160 |
| 7 | 629/70 A4 | (440) | 0,8 | 628 HPK 7 (471) | (0,3) | 110 NPH | (0,5) | 36 | (1,2) | 25 | 40 | 170 |

(1) Angabe $CH_2O$, 100%, eingesetzt als PF 91 (2) mMol Säure pro 100 g Festharz (3) für die Prüfung der pigmentierten Lacke

Prüfung der erfindungsgemäß hergestellten Bindemittel

Aus den Bindemitteln gemäß Beispiel 1 bis 7 wurden Lacke gemäß folgendem Ansatz hergestellt:

80 Tle Farbpaste (siehe unten)
75 Tle Harz (100%ig) entsprechend Beispiel 1 - 7 eingesetzt als wäßrige Dispersion, siehe Tab. 2)

---

deionisiertes Wasser zur Verdünnung auf einen Festkörpergehalt von 18 %

Die Lacke wurden unter Bedingungen, welche eine Trockenfilmstärke von 20 ± 2 µm ergeben auf zinkphosphatiertem Stahlblech kathodisch abgeschieden und bei der in der Tabelle 2 angegebenen Einbrenntemperatur 30 Minuten eingebrannt. In allen Fällen wird beim Salzsprühtest gemäß ASTM B-117-64 nach einer Prüfdauer von 700 Stunden ein Angriff am Kreuzschnitt von weniger als 2 mm festgestellt. Beim Feuchtschranktest (100 % relative Luftfeuchtigkeit bei 50°C) sind die Beschichtungen nach 500 Stunden in einwandfreiem Zustand. Die Prüfung der Lösemittelfestigkeit nach dem MEK-Rub-Test ergibt in allen Fällen über 100 Doppelhübe.

Die Farbpaste ist wie folgt zusammengesetzt:

100 Tle Anreibeharz (100%)
1 Tle Farbruß
12 Tle basisches Bleisilikat
147 Tle Titandioxid

Die Herstellung des Anreibeharzes erfolgt in folgender Weise: 500 Tle eines Epoxidharzes auf Basis von Bisphenol A (Epoxidäquivalentgewicht ca. 500) werden in 214 Tlen PME gelöst und bei 110 Grad C mit 83 Tlen eines Halbesters aus Phthalsäureanhydrid und EHX in Gegenwart von 0,5 g Triethylamin als Katalysator bis zu einer Säurezahl von weniger als 3 mg KOH/g reagiert. Dann werden 120 Tle eines NHfunktionellen Oxazolidins aus Aminoethylethanolamin, 2-Ethylhexylacrylat und Formaldehyd, sowie 26 Tle DEAPA zugefügt und der Ansatz bei 80 Grad C bis zu einem Epoxidwert von praktisch 0 reagiert. Der Ansatz wird mit 200 Tlen Propylenglykolmonomethylether verdünnt und mit 97 Tlen 3-normaler Ameisensäure partiell neutralisiert. Der resultierende Festkörpergehalt beträgt 58,8.%.

FORMELSCHEMA

(I)

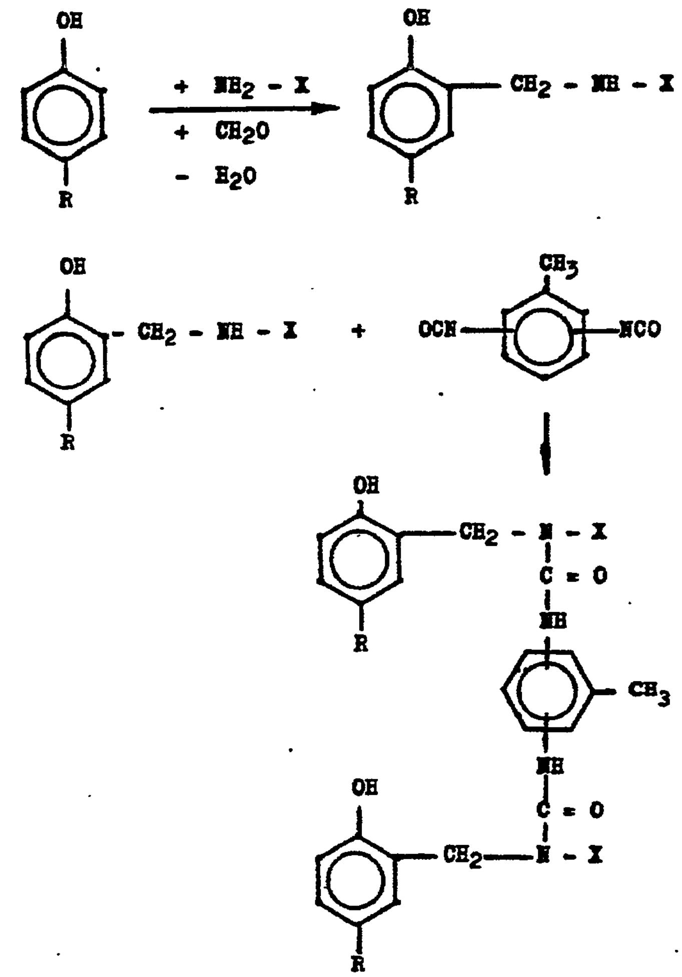


(II)

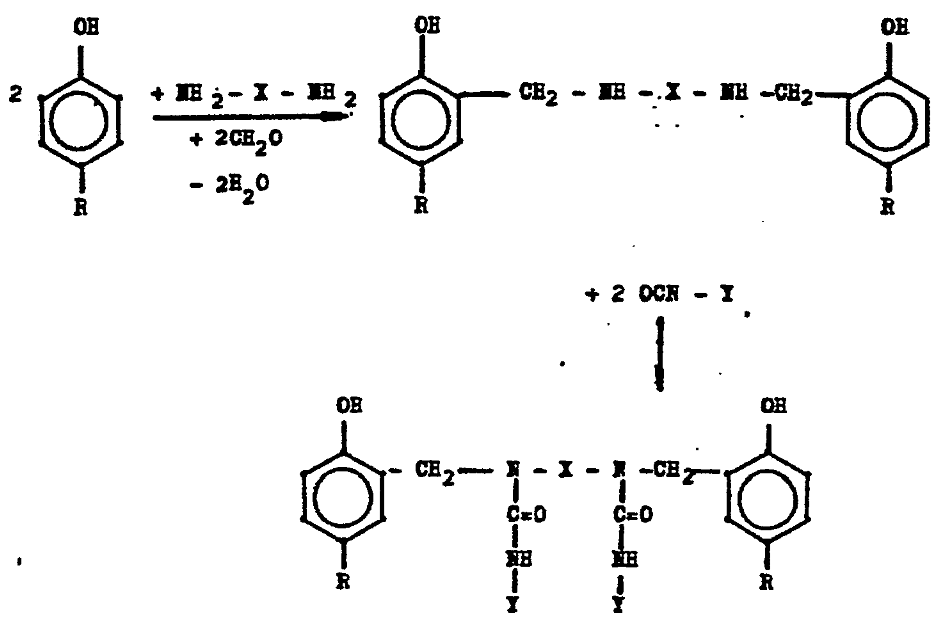

## Patentansprüche

1. Verfahren zur Herstellung von Harnstoffgruppierungen aufweisenden resolhärtbaren Lackbindemitteln auf der Basis von resolmodifizierten Epoxidharzaminaddukten, wobei man aus einem monosubstituierten ein- oder zweiwertigen Phenol, aus einem primären Monoamin und/oder Diamin und aus Formaldehyd ein Aminoalkylierungsprodukt herstellt, dessen Aminowasserstoffe in einem weiteren Reaktionsschritt in Gegenwart eines aprotischen Lösemittels bei 30 bis 50°C mit Mono- und/oder Diisocyanatverbindungen bis zu einem NCO-Wert von 0 unter Bildung von Harnstoffgruppierungen zu einem höchstens vier, vorzugsweise zwei, Phenolkörper aufweisenden Zwischenprodukt umgesetzt werden, welches anschließend mit einem, gegebenenfalls modifizierten, Epoxidharz-Aminaddukt, welches keine freien Epoxidgruppen enthält, und mit Formaldehyd bei 50 bis 90°C bis zur vollständigen Bindung des Formaldehyds reagiert wird, wobei pro Mol NH-Gruppen des phenolischen Zwischenproduktes, und pro Mol formaldehydreaktiver Stellen der Phenolkörper 0,4 bis 0,9 Mol Formaldehyd eingesetzt werden.

2. Verfahren nach Anspruch 1, dadurch gekennzeichnet, daß man Aminoalkylierungsprodukte einsetzt, welche neben den substituierten Harnstoffgruppen zusätzlich tertiäre Aminogruppen aufweisen.

3. Verwendung der gemäß den Ansprüchen 1 und 2 hergestellten Produkte als Bindemittel für Einbrennlacke.

4. Verwendung der gemäß den Ansprüchen 1 und 2 hergestellten Produkte als Bindemittel für kathodisch abscheidbare Elektrotauchlacke.

## Claims

1. Process for the preparation of resol-curable paint binders containing urea groupings and based on resol-modified epoxy resin-amine adducts, in which an aminoalkylation product is prepared from a monosubstituted monohydric or dihydric phenol, a primary monoamine and/or diamine and formaldehyde, the amino hydrogen atoms of said aminoalkylation product are reacted in a further reaction step in the presence of an aprotic solvent at 30 to 50°C with monoisocyanate and/or diisocyanate compounds until an NCO value of 0 is reached, with the formation of urea groupings, to give an intermediate product which contains not more than four, preferably two, phenolic substances and which is then reacted with an optionally modified epoxy resin-amine adduct containing no free epoxy groups and with formaldehyde at 50 to 90°C until the formaldehyde is completely bound, 0.5 to 1.0 mol of the phenolic intermediate product being employed per mol of NH groups in the epoxy resin-amine adduct and 0.4 to 0.9 mol of formaldehyde being employed per mol of formaldehyde-reactive positions in the phenolic substances.

2. Process according to Claim 1, characterized in that aminoalkylation products which, as well as the substituted urea groups, additionally contain tertiary amino groups are employed.

3. Use of the products prepared in accordance with Claims 1 and 2 as binders for stoving paints.

4. Use of the products prepared in accordance with Claims 1 and 2 as binders for electrodeposition paints which can be deposited at the cathode.

## Revendications

1. Procédé de préparation de liants pour laques durcissables par le résol, présentant des groupements urée, à base de produits d'addition résine époxy-amine modifiés par le résol, dans lequel on prépare à partir d'un mono- ou diphénol monosubstitué, d'une monoamine et/ou diamine primaire et de formaldéhyde un produit d'aminoalkylation dont les hydrogènes aminés sont mis à réagir, dans une étape de réaction ultérieure en présence d'un solvant aprotique entre 30 et 50°C, avec des composés de mono- et/ou diisocanate jusqu'à un indice de NCO de 0 avec formation de groupements urée pour former un produit intermédiaire présentant au plus quatre, de préférence deux corps phénoliques qui est ensuite mis à réagir avec un produit d'addition résine époxy-amine éventuellement modifié qui ne contient pas de groupes époxy libres, et avec le formaldéhyde entre 50 et 90°C jusqu'à une liaison complète du formaldéhyde, 0,5 à 1,0 mole de produit intermédiaire phénolique étant utilisée par mole de groupes NH du produit d'addition résine époxy-amine, et 0,4 à 0,9 mole de formaldéhyde étant utilisée par mole de sites réactifs avec le formaldéhyde des corps phénoliques.

2. Procédé selon la revendication 1, caractérisé en ce que l'on utilise des produits d'aminoalkylation qui présentent, outre les groupes urée substitués, des groupes amino tertiaires.

3. Utilisation comme liants pour laques à cuire des produits préparés selon les revendications 1 et 2.

4. Utilisation comme liants pour laques pour trempage électrophorétique précipitables à la cathode des produits préparés selon les revendications 1 et 2.